# EUROPÄISCHE PATENTSCHRIFT

(11) **EP 2 044 143 B1**
(45) Veröffentlichungstag und Bekanntmachung des Hinweises auf die Patenterteilung: **15.02.2017**
(21) Anmeldenummer: 07786235.7
(22) Anmeldetag: 20.07.2007
(51) Int. Cl.: C08G 77/60, C09D 183/16, C01B 33/107, H05H 5/04, C01B 33/027

(54) **POLYSILANVERARBEITUNG UND VERWENDUNG**
POLYSILANE PROCESSING AND USE
TRAITEMENT DE POLYSILANES ET UTILISATION

(30) Priorität: 20.07.2006 DE 102006034061
(43) Veröffentlichungstag der Anmeldung: 08.04.2009
(60) Teilanmeldung: 11167142.6
(73) Patentinhaber: Spawnt Private S.à.r.l., 1148 Luxembourg (LU)
(72) Erfinder: AUNER, Gudrun, Annette, 61479 Glashütten (DE); BAUCH, Christian, 06766 Bitterfeld-Wolfen (DE); LIPPOLD, Gerd, 04179 Leipzig (DE); DELTSCHEW, Rumen, 04319 Leipzig (DE)
(74) Vertreter: Epping - Hermann - Fischer
(86) Internationale Anmeldenummer: PCT/EP2007/006487
(87) Internationale Veröffentlichungsnummer: WO 2008/009473

(56) Entgegenhaltungen:
- EP-A- 0 264 722
- EP-A1- 1 264 798
- WO-A-02/100776
- WO-A-2004/036631
- WO-A-2006/125425
- WO-A1-2006/013129
- US-A- 4 070 444
- US-A- 4 683 147
- US-A1- 2004 152 287

## Beschreibung

WO 2006/125425 A1 offenbart in Beispiel 1 ein Verfahren, bei dem eine Mischung aus H₂ und SiCl₄ (8: 1) in einem plasmachemischen Schritt zu einem farblosen, öligen Produkt umgesetzt wird, das dann in einem weiteren Schritt bei 800 ° C zu einem schwarzen Rückstand pyrolysiert wird.

WO 2006/01329 A1 betrifft ein Verfahren zur Reinigung von SiCl₄. In diesem Verfahren wird ein plasmachemischer Schritt verwendet, um Verunreinigungen wie Methyltrichlorsilan (MTCS) und Trichlorsilan (TCS) zu Verbindungen mit höherem Siedepunkt umzusetzen, so dass das Monosilan SiCl₄ mit hoher Reinheit abdestilliert werden kann.

Die Erfindung betrifft ein Verfahren zur endproduktbezogenen Herstellung von halogenierten Polysilanen nach Anspruch 1. Bevorzugte Ausführungsformen werden in den Unteransprüchen dargestellt.

Als Polysilane im Sinne des erfindungsgemäßen Verfahrens werden chemische Verbindungen bezeichnet, die sich durch mindestens eine direkte Bindung Si-Si auszeichnen. Polysilane können lineare Siₙ-Ketten und/oder Siₙ-Ringe enthalten sowie Kettenverzweigungen aufweisen.

Halogenierte Polysilane im Sinne des erfindungsgemäßen Verfahrens sind Polysilane, deren Substituenten weitgehend aus Halogenen X = F, Cl, Br, I sowie aus Wasserstoff bestehen. Halogenierte Polysilane im Sinne des erfindungsgemäßen Verfahrens sind wasserstoffarm mit einem Verhältnis H : X ≤ 1 : 5.

### Darstellung der Polysilane

Das halogenierte Polysilangemisch, das unter anderem zur Herstellung von Silizium dienen kann, wird in einem plasmachemischen Schritt aus SiX₄ und H₂ erzeugt. Dieses Verfahren ist in der Patentanmeldung Prof. Dr. Auner DE "Verfahren zur Herstellung von Silizium aus Halogensilanen" beschrieben WO 2006/125425 A1. Die Plasmareaktion kann zum Beispiel mittels kontinuierlicher Anregung (continuous wave) durchgeführt werden:
Ein H₂/SiX₄-Dampf-Gemisch wird mittels eines elektrischen oder elektromagnetischen Wechselfeldes angeregt und in den plasmaförmigen Zustand überführt. Dabei entstehen je nach Reaktionsbedingungen flüssige, halbfeste oder feste Gemische halogenierter Polysilane.

Unter niedermolekularen Polysilanen werden Polysilane mit 2 bis 6 Siliziumatomen, unter mittelmolekularen Polysilanen Polysilane mit 7 bis 14 Siliziumatomen und unter hochmolekularen Polysilanen solche mit mindestens 15 Siliziumatomen verstanden. Die gewählten Gruppen unterscheiden sich hinsichtlich ihrer Weiterverarbeitungsmöglichkeiten durch Destillation, Hydrierbarkeit oder Derivatisierbarkeit.

Es erweist sich erfindungsgemäß als besonders vorteilhaft, die Reaktionsbedingungen in dem Plasmareaktor gezielt so zu steuern, dass nicht nur irgendein halogeniertes Polysilangemisch erzeugt wird, sondern das für die weitere Verarbeitung vorteilhafteste Polysilangemisch.

Die zur weiteren Verwendung vorgesehenen spezifischen halogenierten Polysilane lassen sich insbesondere über die Molekularmassen sowie weitere geeignete Bestimmungsverfahren eindeutig bestimmen. Es lassen sich niedermolekulare, mittelmolekulare und hochmolekulare halogenierte Polysilane herstellen und charakterisieren, wobei cyclisch aufgebauten Polysilanen ebenfalls Bedeutung hinsichtlich der Polymerisation zu langkettigen Polysilanen zukommt.

Es erweist sich als vorteilhaft, die im Plasmareaktor vorgesehene Plasmaquelle in mehreren Stufen vorzusehen und alle denkbaren Maßnahmen zum zielgerichteten Energieeintrag in ein möglichst kleines Raumvolumen mit einem möglichst homogenen Reaktionsgemisch vorzusehen.

Dieses ermöglicht einen hohen Durchsatz des Reaktionsgemisches bei weitestgehend homogenen Reaktionsbedingungen und damit auch weitgehend homogenen Reaktionsprodukten.

Entscheidend für ein möglichst homogenes Reaktionsprodukt ist es, den Energieeintrag in das zu erzeugende Reaktionsplasma so homogen wie möglich zu gestalten und in dem Plasma möglichst homogene Reaktionsbedingungen zu schaffen. Hier erweist es sich als vorteilhaft, nicht nur eine Plasmaanregung vorzusehen, sondern mehrere Plasmaanregungen, die von dem Reaktionsgemisch hintereinander durchlaufen werden.

Um einen möglichst gleichmäßigen Energieeintrag in das von dem Reaktionsgemisch ausgefüllte Raumvolumen zu erhalten, erweist es sich als vorteilhaft, die Plasmaquelle zu pulsen, um eine gleichmäßigere Anregung des Reaktionsgemisches zu erhalten.

Das gleiche Ziel der homogeneren Anregung kann erreicht werden, in dem das Reaktionsgemisch einem zusätzlichen Elektronenfluss zur Herbeiführung eines stabileren Plasmas beziehungsweise einer besseren Plasmazündung ausgesetzt wird.

Zusätzlich kann das Reaktionsgemisch durch außen an dem Reaktor angebrachte elektromagnetische Spulen gequencht werden, womit das Reaktionsplasma einer Kompression mit anschließender Expansion unterworfen wird. Hier wird erfindungsgemäß auch vorgesehen, dass das Reaktionsgemisch eine auf die Wellenlänge der Anregungsquelle abgestimmte Resonatorkammer durchläuft.

Es erweist sich als vorteilhaft, das Plasma zusätzlich einer sichtbaren oder ultravioletten Lichteinstrahlung auszusetzen, um selektiv Ionen oder Moleküle im Reaktionsgemisch anregen zu können.

Entscheidend für einen kontinuierlichen Betrieb der Anlage ist, dass das Produktgemisch eine flüssige (zähflüssige) Konsistenz aufweist, damit es aus dem Reaktor herausfließen kann, um Verstopfungen zu vermeiden.

Die flüssige Konsistenz der erzeugten halogenierten Polysilangemische wird erreicht, in dem in dem Reaktor mit SiX₄-Überschuss und möglichst wenig H₂-Gehalt gefahren wird und die Temperatur des Reaktors unterhalb der Raumtemperatur gehalten wird.

Es ist daher vorteilhaft, dass die Molkonzentration von Wasserstoff im eingesetzten Gasgemisch kleiner ist als die Molkonzentration des SiX₄.

Die Charakterisierung der dargestellten Polysilane erfolgt am Beispiel einer chlorierten Polysilanmischung wie folgt:
Die maßanalytische Bestimmung des Chlorgehalts (Chlorid nach Mohr) einer in wässriger Lauge aufgelösten Probe liefert die empirische Formel SiCl₂₊ₓ für das Polysilangemisch, wobei x je nach mittlerer Kettenlänge zwischen 0 und 1 variiert, weshalb man auch von einem polymeren Dichlorsilylen sprechen kann, das aus Ringen (x=0) und Ketten (0<x≤1) besteht, wobei die Ketten mit -SiCl₃ Gruppen terminiert sind. Die Summenformel der Ringe lautet: SiₙCl₂ₙ und die der Ketten: SiₙCl₂ₙ₊₂.

EDX-Messungen bestätigen ein Atomverhältnis im Produkt von ca. Si:Cl = 1:2.
²⁹Si-NMR-Messungen zeigen, dass es sich bei dem Produkt je nach Erzeugungsbedingungen um ein komplexes Gemisch verschiedener chlorierter Polysilane handeln kann. Dabei liegen vorwiegend unverzweigte Verbindungen vor, wie das Fehlen von Signalen tertiärer (Cl-Si(SiR₃)₃) und quartärer (Si(SiR₃)₄) Siliziumatome belegt. ¹H-NMR-Messungen zeigen, dass das Produkt nur Spuren von Wasserstoff enthält (Si-H-Bindungen).

Die erhaltenen halogenierten Polysilangemische werden als niedermolekulare, mittelmolekulare und hochmolekulare Polysilane bezeichnet. Das niedermolekulare Polysilangemisch setzt sich vorwiegend aus Hexachlordisilan (Si:Cl = 1:3) und Octachlortrisilan S₃Cl₈ (Si:Cl = 1:2,67) zusammen. Diese beiden Komponenten können durch Destillation voneinander getrennt werden.

### Trennung des Polysilangemisches:

Aus dem Produktgemisch werden durch Destillation einzelne Komponenten bzw. Fraktionen erhalten werden.
1. Hexachlordisilan entweicht zuerst bei einer Temperatur von ca. 144°C/l013 hPa, wobei auch schon bei der Polysilansynthese dampfförmig aus dem Gemisch abgetrennt und kondensiert (z. B. 0°C) werden kann.
2. Die nächste Fraktion bilden die niederen chlorierten Oligosilane, wie z. B. das Octachlortrisilan, das Decachlortrisilan und das Decachlorisotetrasilan.
3. Als Rückstand bleiben die Polysilane, deren Zersetzungstemperaturen unterhalb der Siedepunkte bei Normaldruck liegen.

### Hydrierung der Polysilane:

Durch Hydrierung der halogenierten Polysilane können teil- und perhydrierte Verbindungen erhalten werden, d. h. die Halogenatome sind teilweise oder vollständig durch Wasserstoffatome ersetzt. Die Hydrierung kann in inerten Lösungsmitteln wie Ethern, Toluol etc. durchgeführt werden, wobei als Hydrierungsmittel vor allem Metall- und Metalloidhydride geeignet sind. Besonders hervorzuheben sind hier das Natriumaluminiumhydrid und verschiedene Borhydride wie z. B. Natriumborhydrid. Bei der Hydrierung sollte bei möglichst niedrigen Temperaturen (RT oder tiefer) gearbeitet werden, um eine Zersetzung der gebildeten Polysilane zu unterdrücken.

Zweckmäßigerweise werden nur die gewünschten Fraktionen hydriert, so dass ein möglichst einheitliches Produkt/Produktgemisch erhalten wird.

Potentielle Anwendungen der dargestellten Polysilane:
1. Die vollständige Pyrolyse des Produktgemisches oder einzelner Komponenten (halogenierte Polysilane) führt zur Bildung von Silizium, welches z. B. für die Photovoltaik oder die Mikroelektronik verwendet werden kann, wenn zur Herstellung des Polysilans entsprechend reine Ausgangsverbindungen eingesetzt werden.
2. Nach destillativer Trennung des Produktgemisches können die Komponenten mit hohem Dampfdruck zur Abscheidung von Siliciumschichten (z. B. a-Si, mono- oder polykristallinem Silicium) aus der Gasphase auf geheizten Substraten eingesetzt werden, wobei eine Wärmenachbehandlung je nach Trägermaterial induktiv oder durch Infrarotbestrahlung durchgeführt werden kann.
3. Hierzu eignen sich z. B. das Hexachlordisilan und die niederen Oligosilane, wobei Siliciumschichten bereits ab Temperaturen von 400-500°C sowohl in Gegenwart von H₂ auch ohne H₂ abgeschieden werden können. Hierzu werden die Substanzen dampfförmig, auch im Gemisch mit Trägergas (z. B. H₂), über das geheizte Substrat geleitet.
4. Die Komponenten mit geringem Dampfdruck können aus dem Produktgemisch heraus oder nach Abtrennung der Anteile mit höherem Dampfdruck ebenfalls zur Schichtabscheidung von Silicium genutzt werden, wenn sie in Substanz oder als Lösung auf ein heizbares Substrat aufgetragen und pyrolysiert werden.
5. Die Abscheidung von Silicium auf Substratoberflächen oder die Wärmenachbehandlung einer auf einem Substrat erzeugten Siliziumschicht kann zur Verbindungsbildung mit dem Substrat genutzt werden. So kann beispielsweise die Oberfläche von Metallsubstraten durch Erzeugung einer Metallsilicidschicht modifiziert werden, um eine erhöhte Abrasionsfestigkeit, größere Härte oder andere Oberflächenvergütung zu erreichen.
6. Durch Hydrierung des Produktgemisches oder einzelner Komponenten können vollständig oder teilweise hydrierte Polysilane erhalten werden, die sich besonders zur Abscheidung von Siliciumschichten auf Substraten bei niedriger Temperatur eignen, z. B. (SiH₂)ₙ → n Si + n H₂. Dabei können die leichtflüchtigen hydrierten Oligosilane für Abscheidungen aus der Gasphase verwendet werden. Die schwerer flüchtigen hydrierten Polysilane können dann unverdünnt oder als Lösung in inerten Lösemitteln (z. B. Toluol) auf einen Träger aufgebracht werden und durch geeignete Maßnahmen (z. B. Erhitzen, UV-Licht, etc.) unter Bildung einer Siliciumschicht zersetzt werden.
7. Durch Derivatisierung des Produktgemisches oder einzelner Komponenten lassen sich Organopolysilane erhalten, wie z. B. teil- oder permethylierte Verbindungen der allgemeinen Formeln SiₙXₐMe_{b} (a + b = 2n) und SiₙX_{c}Me_{d} (c + d = 2n + 2). Die Organopolysilane können dann, z. B. durch geeignete Kupplungsreaktionen (z. B. Wurtz-Kupplungen) in Polymere eingebaut oder auf bestehende Polymere aufgepfropft werden, um die besonderen optischen oder elektronischen Eigenschaften der Polysilanketten zu nutzen. In der anorganischen Synthesechemie sind verschiedene Methoden zur chemischen Umwandlung von unterschiedlich substituierten Polysilanen durch Kettenspaltung oder Ringöffnung sowie den partiellen Ersatz von Substituenten durch beispielsweise Halogene bekannt. Diese Methoden können auf das primäre Polysilangemisch, einzelne Fraktionen nach einer Auftrennung, abgetrennte reine Verbindungen oder Folgeprodukte der teilweisen oder vollständigen Substitution der Halogenatome in den entsprechenden Polysilanen angewendet werden. So lassen sich beispielsweise vollständig organosubstituierte cyclische Silane durch Ringöffnung in Ketten umwandeln, die nur an den Enden Halogensubstituenten tragen oder unter angepassten Bedingungen an vollständig organosubstituierten Cyclosilanen nur ein bzw. zwei Substituenten gegen Halogene austauschen, so dass das Ringsystem erhalten bleibt. Auch eine direkte Nutzung geeignet derivatisierter Polysilane, z. B. in Form dünner Schichten auf geeigneten Substraten, ist denkbar. Eine mögliche Verwendung der Organopolysilane liegt in der Herstellung von LED's.
8. Polysilane, die einzelne oder mehrere Wasserstoffsubstituenten enthalten, lassen sich durch Hydrosilylierung an C-C-Mehrfachbindungen addieren, so dass je nach Reaktionspartner und Reaktionsbedingungen Wasserstoffgegen Organosubstituenten ausgetauscht werden oder Copolymere mit organischen Verbindungen sowie Polysilan-Seitenketten an organischen Polymeren erzeugt werden.
9. Geeignete C-substituierte Polysilane erzeugen bei ihrem Einsatz als Precursoren Siliciumcarbid und geeignete Stickstoff-substituierte Polysilane erzeugen bei ihrem Einsatz als Precursoren Siliciumnitrid. Auf diese Weise sind nach angepasster Verarbeitung der Precursoren entsprechend auch Schichten aus Siliciumcarbid oder Siliciumnitrid zugänglich.
10. Nach Trennung (z. B. destillativ) können die halogenierten Polysilane auch als Feinchemikalien für Synthesen eingesetzt werden. So kann z. B. Hexachlordisilan, welches je nach Plasmabehandlung ein Hauptbestandteil des Produktgemisches ist, für Deoxygenierungsreaktionen in der Synthesechemie verwendet werden.

Das erfindungsgemäße Verfahren zur Verwendung von Polysilanen ist in 5 Zeichnungen dargestellt.

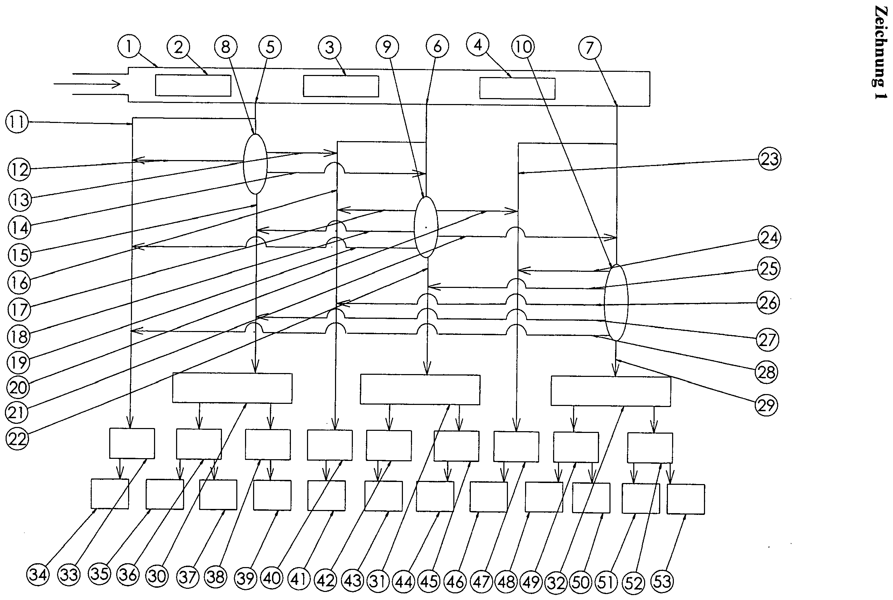

Zeichnung 1 stellt das gesamte Verfahrensschema zur Verarbeitung dar.

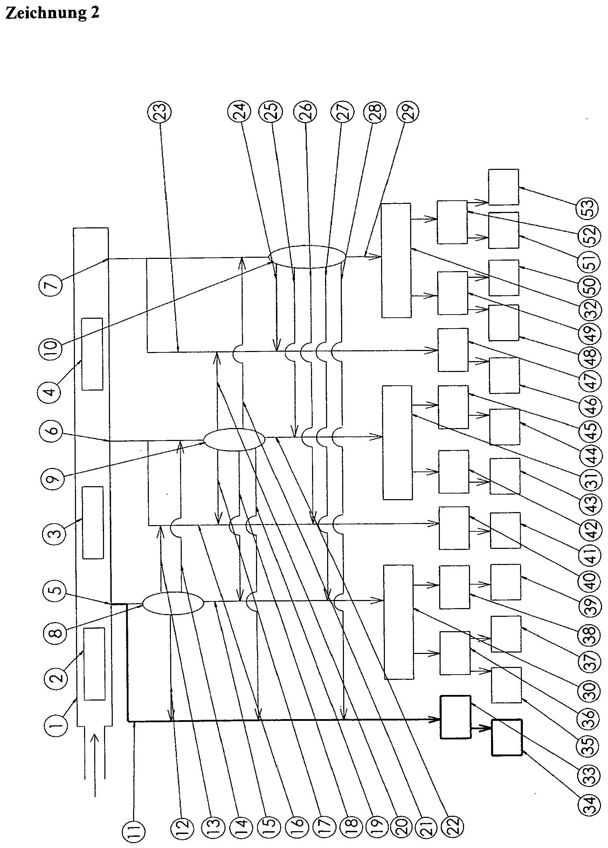

Zeichnung 2 stellt die Nutzung des Verfahrensschemas für die Abscheidung von Bulk-Silicium aus halogenierten Polysilanen kleiner Molmasse wie zum Beispiel Hexachlordisilan dar.

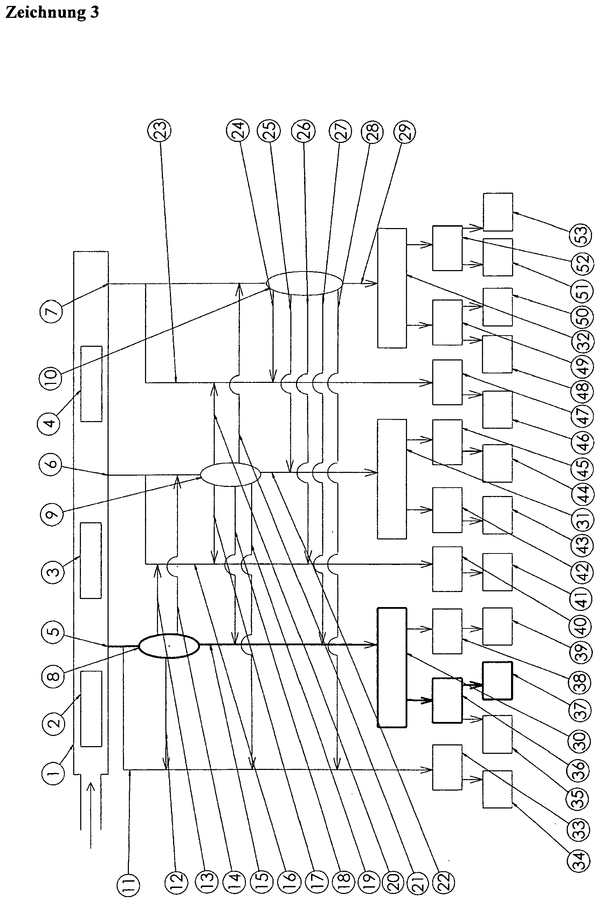

Zeichnung 3 stellt die Nutzung des Verfahrensschemas für die Hydrierung und die Abscheidung von Dünnschichtsilizium aus hydrierten Polysilanen kleiner Molmasse wie zum Beispiel Disilan dar.

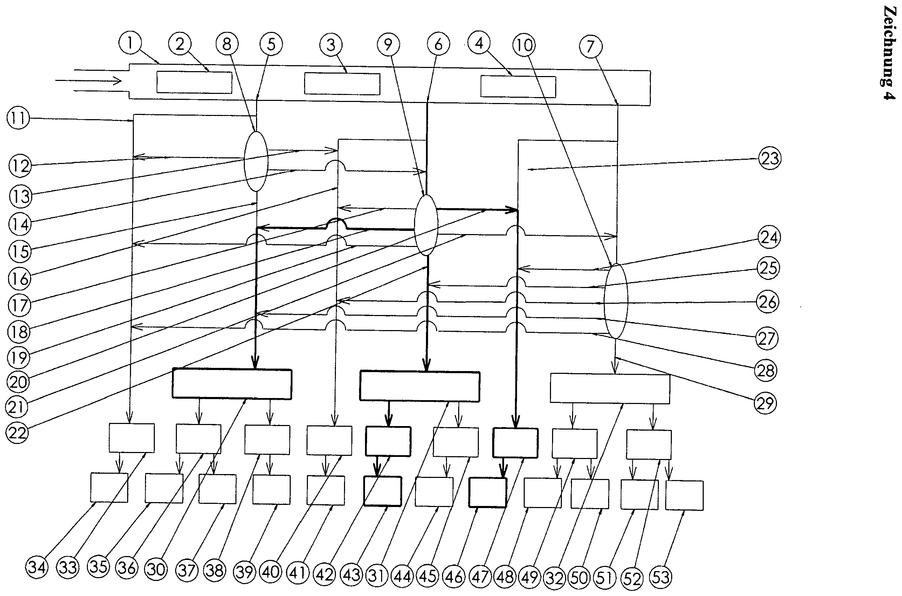

Zeichnung 4 stellt die Nutzung des Verfahrensschemas zur partiellen Methylierung halogenierter Polysilane mittlerer Molmasse wie zum Beispiel Decachlortetrasilan und die weitere Verarbeitung dieser Organochlorpolysilane durch die Wurtz-Kupplung dieser Organopolysilane an langkettige Polymere dar bei Rückführung der nieder- und hochmolekularen halogenierten Polysilane aus der Destillation in den Vorratsbehälter für nieder-/hochmolekulare Polysilane und die Abführung des hochmolekularen Destillationsrestes in die unmittelbare Abscheidung von Silicium.

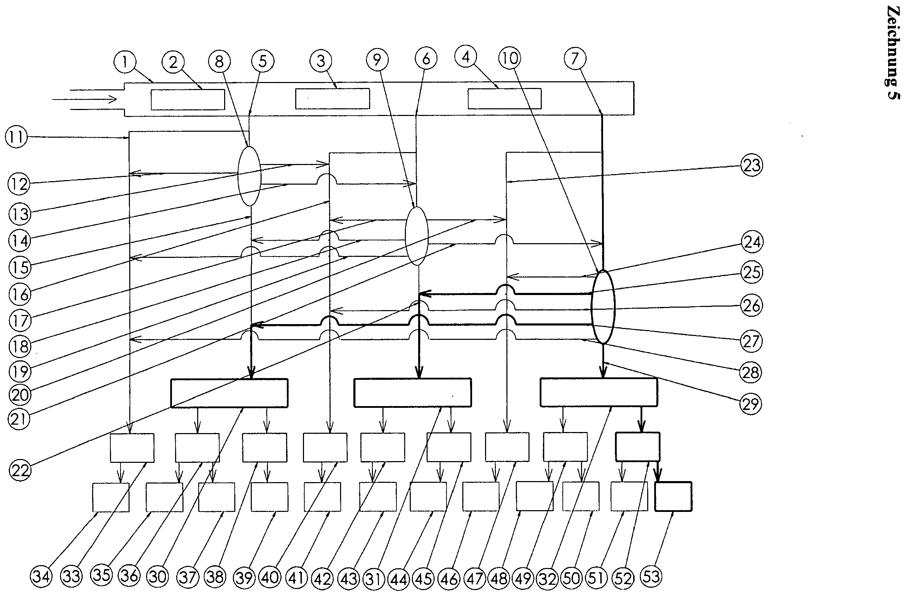

Zeichnung 5 stellt die Nutzung des Verfahrens zur Abtrennung von hochmolekularen halogenierten Polysilanen, deren Methylierung und anschließende Verarbeitung zu Organopolysilanen bei Rückführung der nieder- und mittelmolekularen Destillate in die jeweiligen Vorratsbehälter dar.

### Bezugszeichenliste:

1. Plasmareaktor
2. elektromagnetischer Hochfrequenzerzeuger I
3. elektromagnetischer Hochfrequenzerzeuger II
4. elektromagnetischer Hochfrequenzerzeuger III
5. Abführung vorwiegend niedermolekularer halogenierter Polysilane
6. Abführung vorwiegend mittelmolekularer halogenierter Polysilane
7. Abführung vorwiegend hochmolekularer halogenierter Polysilane
8. Destillation vorwiegend niedermolekularer halogenierter Polysilane
9. Destillation vorwiegend mittelmolekularer halogenierter Polysilane
10. Destillation vorwiegend hochmolekularer halogenierter Polysilane
11. Abführung undestillierter niedermolekularer halogenierter Polysilane
12. Abführung Destillationsrückstände
13. Abführung Destillationsrückstände
14. Abführung Destillationsrückstände
15. Abführung niedermolekularer Destillate
16. Abführung undestillierter mittelmolekularer halogenierter Polysilane
17. Abführung Destillationsrückstände
18. Abführung Destillationsrückstände
19. Abführung Destillationsrückstände
20. Abführung Destillationsrückstände
21. Abführung Destillationsrückstände
22. Abführung mittelmolekularer Destillate
23. Abführung undestillierter hochmolekularer halogenierter Polysilane
24. Abführung Destillationsrückstände
25. Abführung Destillationsrückstände
26. Abführung Destillationsrückstände
27. Abführung Destillationsrückstände
28. Abführung Destillationsrückstände
29. Abführung hochmolekularer Destillate
30. Vorratsbehälter niedermolekularer halogenierter Polysilane
31. Vorratsbehälter mittelmolekularer halogenierter Polysilane
32. Vorratsbehälter hochmolekularer halogenierter Polysilane
33. Vorratsbehälter vorwiegend niedermolekularer halogenierter Polysilangemische
34. Abscheidevorrichtung für Silicium aus niedermolekularen Polysilangemischen
35. Abscheidevorrichtung für Siliziumschichten aus gasförmigen niedermolekularen hydrierten Polysilanen
36. Hydrierungsreaktor
37. Speicherbehälter flüssiger niedermolekularer hydrierter Polysilane
38. Methylierungsreaktor
39. Speicherbehälter niedermolekularer Organopolysilane
40. Vorratsbehälter vorwiegend mittelmolekularer halogenierter Polysilangemische
41. Abscheidevorrichtung für Silizium aus mittelmolekularen Polysilangemischen
42. Hydrierungsreaktor
43. Abscheidevorrichtung für Siliziumschichten aus gasförmigen mittelmolekularen hydrierten Polysilanen
44. Speicherbehälter mittelmolekularer Organopolysilane
45. Methylierungsreaktor
46. Abscheidevorrichtung für Silizium aus hochmolekularen Polysilangemischen
47. Vorratsbehälter vorwiegend hochmolekularer halogenierter Polysilangemische
48. Abscheidevorrichtung für Siliziumschichten aus gasförmigen hochmolekularen hydrierten Polysilanen
49. Hydrierungsreaktor
50. Speicherbehälter flüssiger hochmolekularer hydrierter Polysilane
51. Speicherbehälter gasförmiger hochmolekularer Organopolysilane
52. Methylierungsreaktor
53. Speicherbehälter flüssiger hochmolekularer Organopolysilane

## Patentansprüche

1. Verfahren zur endproduktbezogenen Herstellung und Weiterverarbeitung von halogenierten Polysilangemischen zur Erzeugung von Silizium und/oder siliziumbasierten Produkten, **dadurch gekennzeichnet, dass** je nach erzeugtem Polysilangemisch niedermolekularer Polysilane mit 2 bis 6 Siliziumatomen, mittelmolekularer Polysilane mit 7 bis 14 Siliziumatomen oder hochmolekularer Polysilane mit mindestens 15 Siliziumatomen und gewünschtem End- und/oder Zwischenprodukt
- ein halogeniertes Polysilangemisch mit Substituenten X, , wobei X aus der aus F, Cl, Br, I und H bestehenden Gruppe ausgewählt ist, das in einem plasmachemischen Schritt aus SiX₄, wobei X aus der aus F, Cl, Br, und I bestehenden Gruppe ausgewählt ist, und H₂ erzeugt wurde, in der Gas- oder Flüssigphase in einer oder mehreren Destillationskolonnen in einzelne Fraktionen getrennt wird und die Destillate unmittelbar verarbeitet werden und weiteren Verarbeitungsschritten zugeführt werden, wobei das zur Weiterverarbeitung gelangende Polysilangemisch in seiner Zusammensetzung über die Regelung des Herstellungsprozesses und der Stoffflüsse gesteuert wird und wobei die erzeugten halogenierten Polysilane wasserstoffarm mit einem Verhältnis H : X ≤ 1:5 sind.

2. Verfahren zur endproduktbezogenen Herstellung und Weiterverarbeitung von halogenierten Polysilangemischen gemäß Anspruch 1 **dadurch gekennzeichnet, dass** zur Steuerung der Zusammensetzung des Polysilangemisches einer oder mehrere Plasmareaktoren hintereinander von dem zugeführten Reaktionsgemisch aus Halogensilan und H2 durchlaufen werden und die mittlere Molmasse des Polysilangemisches nach Durchlaufen eines jeden Plasmareaktors zunimmt.

3. Verfahren zur endproduktbezogenen Herstellung und Weiterverarbeitung von plasmachemisch hergestellten halogenierten Polysilangemischen gemäß Anspruch 1 oder 2 **dadurch gekennzeichnet, dass** zur Steuerung der Zusammensetzung des Polysilangemisches in einem Plasmareaktor mehrere Plasmaquellen vorgesehen und diese von dem Reaktionsgemisch durchlaufen werden und nach jeder Plasmaquelle in dem einen Plasmareaktor die mittlere Molmasse des Polysilangemisches zunimmt.

4. Verfahren zur endproduktbezogenen Herstellung und Weiterverarbeitung von plasmachemisch hergestellten halogenierten Polysilangemischen gemäß Anspruch 1 bis 3 **dadurch gekennzeichnet, dass** die Temperatur des Plasmareaktors oder einzelner Komponenten unterhalb der Raumtemperatur gehalten wird und die Viskosität des erhaltenen Polysilangemisches durch das Mischungsverhältnis zwischen dem Wasserstoff- und dem Halogensilangehalt des Gasgemisches gesteuert wird.

5. Verfahren zur endproduktbezogenen Herstellung und Weiterverarbeitung von plasmachemisch hergestellten halogenierten Polysilangemischen gemäß Anspruch 1 bis 4 **dadurch gekennzeichnet, dass** die in dem Plasmareaktor zum Einsatz kommenden Plasmaquellen gepulst werden.

6. Verfahren zur endproduktbezogenen Herstellung und Weiterverarbeitung von plasmachemisch hergestellten halogenierten Polysilangemischen gemäß Anspruch 1 bis 5 **dadurch gekennzeichnet, dass** das Plasma in dem Plasmareaktor periodisch durch ein zusätzliches elektromagnetisches Wechselfeld gequencht wird oder eine auf die Mikrowellenquelle abgestimmte Resonatorkammer durchläuft.

7. Verfahren zur endproduktbezogenen Herstellung und Weiterverarbeitung von plasmachemisch hergestellten halogenierten Polysilangemischen gemäß Anspruch 1 bis 6 **dadurch gekennzeichnet, dass** sich in dem Plasmareaktor Plasmapulsung und/oder zusätzliche elektrische Entladung und/oder Plasmaquenchen abwechseln.

8. Verfahren zur endproduktbezogenen Herstellung und Weiterverarbeitung von plasmachemisch hergestellten halogenierten Polysilangemischen gemäß Anspruch 1 bis 7 **dadurch gekennzeichnet, dass** das Plasma in dem Plasmareaktor zusätzlich mit Infrarot- oder sichtbarer- oder Ultraviolettstrahlung bestrahlt wird.

9. Verfahren zur endproduktbezogenen Herstellung und Weiterverarbeitung von halogenierten Polysilangemischen gemäß Anspruch 1 bis 8 **dadurch gekennzeichnet, dass** die vorwiegend niedermolekularen Polysilangemische einer Destillation zugeführt werden, um niedermolekulare halogenierte Polysilane in reiner Form zu erhalten.

10. Verfahren zur endproduktbezogenen Herstellung und Weiterverarbeitung von halogenierten Polysilangemischen gemäß Anspruch 1 bis 9 **dadurch gekennzeichnet, dass** der Destillationsrest mit überwiegend mittleren Molmassen einer unmittelbaren Weiterverarbeitung zugeführt oder in eine andere Destillationskolonne überfuhrt wird.

11. Verfahren zur endproduktbezogenen Herstellung und Weiterverarbeitung von halogenierten Polysilangemischen gemäß Anspruch 1 bis 9 **dadurch gekennzeichnet, dass** die Polysilangemische mit vorwiegend unzersetzt destillierbaren Komponenten mittlerer Molmasse einer Destillation zugeführt werden, um einzelne Komponenten in reiner Form und/oder Fraktion bestimmter Siedebereiche zu erhalten.

12. Verfahren zur endproduktbezogenen Herstellung und Weiterverarbeitung von halogenierten Polysilangemischen gemäß Anspruch 1 bis 8 und 11 **dadurch gekennzeichnet, dass** die Destillate oder Destillationsrückstände mit überwiegend niederen oder hohen Molmassen einer unmittelbaren Weiterverarbeitung zugeführt oder in eine andere Destillationskolonne überführt werden.

13. Verfahren zur endproduktbezogenen Herstellung und Weiterverarbeitung von halogenierten Polysilangemischen gemäß Anspruch 1 bis 8 **dadurch gekennzeichnet, dass** die Trennungsfraktion mit überwiegend niederen oder mittleren Molmassen einer unmittelbaren Weiterverarbeitung zugeführt oder in eine anderen Destillationskolonne überführt werden.

14. Verfahren zur endproduktbezogenen Herstellung und Weiterverarbeitung von halogenierten Polysilangemischen gemäß Anspruch 1 bis 11 und 13 **dadurch gekennzeichnet, dass** die nach der Destillation erhaltenen Polysilane mit niederer oder mittlerer oder hoher einer Hydrierung unterworfen und teil- bzw. perhydrierte Verbindungen erhalten werden.

15. Verfahren zur endproduktbezogenen Herstellung und Weiterverarbeitung von halogenierten Polysilangemischen gemäß Anspruch 14 **dadurch gekennzeichnet, dass** die Hydrierung in Ethern und/oder aromatischen Lösemitteln durchgeführt wird.

16. Verfahren zur endproduktbezogenen Herstellung und Weiterverarbeitung von halogenierten Polysilangemischen gemäß Anspruch 14 oder 15 **dadurch gekennzeichnet, dass** als Hydrierungsmittel Metall- und Metalloidhydride eingesetzt werden.

17. Verfahren zur endproduktbezogenen Herstellung und Weiterverarbeitung von halogenierten Polysilangemischen gemäß Anspruch 14 bis 16 **dadurch gekennzeichnet, dass** die Hydrierung bei Temperaturen unterhalb 20 °C durchgeführt wird.

18. Verfahren zur endproduktbezogenen Herstellung und Weiterverarbeitung von halogenierten Polysilangemischen gemäß Anspruch 1 bis 12 **dadurch gekennzeichnet, dass** die nach der Destillation erhaltenen Polysilane mit niederer, mittlerer und hoher Molmasse einer Methylierung zugeführt und teil- bzw. permethylierte Organopolysilane der Form siₙxₐMe_{b}(a+b=2n) und SiₙX_{c}Me_{d}(c+d=2n+2) erhalten werden.

19. Verfahren zur endproduktbezogenen Herstellung und Weiterverarbeitung von halogenierten Polysilangemischen gemäß Anspruch 18 **dadurch gekennzeichnet, dass** als Methylierungsmittel metalloid- und/oder metallorganische Verbindungen verwendet werden.

20. Verfahren zur endproduktbezogenen Herstellung und Weiterverarbeitung von halogenierten Polysilangemischen gemäß Anspruch 18 bis 19 **dadurch gekennzeichnet, dass** die erhaltenen Organopolysilane in Polymere eingebaut oder auf diese aufgepfropft werden.

21. Verfahren zur endproduktbezogenen Herstellung und Weiterverarbeitung von Polysilangemischen gemäß Anspruch 1 bis 17 **dadurch gekennzeichnet, dass** niedermolekulare halogenierte Polysilangemische unmittelbar aus der Gasphase zur Abscheidung von Silizium über eine erhitzte Oberfläche geleitet und dort pyrolytisch zersetzt werden.

22. Verfahren zur endproduktbezogenen Herstellung und Weiterverarbeitung von halogenierten Polysilangemischen gemäß Anspruch 1 bis 16 **dadurch gekennzeichnet, dass** flüssige halogenierte Polysilangemische oder deren Lösungen in geeigneten Lösungsmitteln auf Abscheideflächen aufgetragen und dort durch Pyrolyse zersetzt werden, wobei dort Silizium abgeschieden wird.

23. Verfahren zur endproduktbezogenen Herstellung und Weiterverarbeitung von halogenierten Polysilangemischen gemäß Anspruch 14 bis 17 **dadurch gekennzeichnet, dass** hydrierte Polysilane ausgewählter Molekularmassen in der Flüssigphase oder in Lösung auf geeignete Oberflächen aufgetragen und durch Erhitzen zersetzt werden, wodurch sich auf diesen Oberflächen Silizium abscheidet.

24. Verfahren zur endproduktbezogenen Herstellung und Weiterverarbeitung von halogenierten Polysilangemischen gemäß Anspruch 21 bis 22 **dadurch gekennzeichnet, dass** als Endprodukt amorphe, polykristalline oder monokristalline Siliziumdünnschichten auf beliebigen Trägerflächen erhalten werden.

25. Verfahren zur endproduktbezogenen Herstellung und Weiterverarbeitung von halogenierten Polysilangemischen gemäß Anspruch 21 bis 24 **dadurch gekennzeichnet, dass** Silizium aus halogenierten Polysilangemischen oberhalb 400 °C oder hydrierten Polysilanen oberhalb 200 °C als beliebig dicke Schicht abgeschieden wird.

26. Verfahren zur endproduktbezogenen Herstellung und Weiterverarbeitung von halogenierten Polysilangemischen gemäß Anspruch 21 bis 25 **dadurch gekennzeichnet, dass** abgeschiedene Siliziumschichten einer Wärmenachbehandlung unterzogen werden.

## Claims

1. A method for the finished-product-related production and further processing of mixtures of halogenated polysilanes for the generation of silicon and/or silicon-based products, **characterized in that**, depending on the generated polysilane mixture of low-molecular-weight polysilanes having 2 to 6 silicon atoms, medium-molecular-weight polysilanes having 7 to 14 silicon atoms or high-molecular-weight polysilanes having at least 15 silicon atoms and the desired finished product and/or intermediate product,
- a mixture of halogenated polysilanes having substituents X, wherein X is selected from the group consisting of F, Cl, Br, I and H, which mixture was generated in a plasma chemical step from SiX₄, wherein X is selected from the group consisting of F, Cl, Br and I, and H₂ is generated in the gaseous or liquid phase is separated into individual fractions in one or more distillation columns and the distillates are processed directly and are fed to further processing steps, wherein the polysilane mixture arriving for further processing is controlled in its composition by the regulation of the production process and of the flows of substances and wherein the halogenated polysilanes that are generated are low in hydrogen with an H:X ratio ≤ 1:5.

2. The method for the finished-product-related production and further processing of mixtures of halogenated polysilanes according to claim 1, **characterized in that** for the control of the composition of the polysilane mixture one or more plasma reactors in succession are passed through by the reaction mixture feed composed of halogenated silane and H2 and the mean molar mass of the polysilane mixture increases after passage through each plasma reactor.

3. The method for the finished-product-related production and further processing of plasma-chemically produced mixtures of halogenated polysilanes according to claim 1 or 2, **characterized in that** for controlling the composition of the polysilane mixture in a plasma reactor multiple plasma sources are provided and these are passed through by the reaction mixture and after each plasma source in the one plasma reactor the mean molar mass of the polysilane mixture increases.

4. The method for the finished-product-related production and further processing of plasma chemically produced mixtures of halogenated polysilanes according to claims 1 to 3, **characterized in that** the temperature of the plasma reactor or of individual components is maintained below ambient temperature and the viscosity of the obtained polysilane mixture is controlled by the mixing ratio between the hydrogen content and the halogenated silane content of the gas mixture.

5. The method for the finished-product-related production and further processing of plasma-chemically produced mixtures of halogenated polysilanes according to claims 1 to 4, **characterized in that** the plasma sources used in the plasma reactor are pulsed.

6. The method for the finished-product-related production and further processing of plasma-chemically produced mixtures of halogenated polysilanes according to claims 1 to 5, **characterized in that** the plasma in the plasma reactor is periodically quenched by an additional electromagnetic alternating field or passes through a resonator chamber tuned to the microwave source.

7. The method for the finished-product-related production and further processing of plasma-chemically produced mixtures of halogenated polysilanes according to claims 1 to 6, **characterized in that** plasma pulsing and/or additional electrical discharge and/or plasma quenching alternate in the plasma reactor.

8. The method for the finished-product-related production and further processing of plasma-chemically produced mixtures of halogenated polysilanes according to claims 1 to 7, **characterized in that** the plasma in the plasma reactor is additionally irradiated with infrared radiation, visible radiation or ultraviolet radiation.

9. The method for the finished-product-related production and further processing of mixtures of halogenated polysilanes according to claims 1 to 8, **characterized in that** the predominantly low-molecular-weight polysilane mixtures are fed to a distillation in order to obtain low-molecular-weight halogenated polysilanes in pure form.

10. The method for the finished-product-related production and further processing of mixtures of halogenated polysilane mixtures according to claims 1 to 9, **characterized in that** the distillation residue with predominantly medium molar masses is fed to a direct further processing or transferred into another distillation column.

11. The method for the finished-product-related production and further processing of mixtures of halogenated polysilane mixtures according to claims 1 to 9, **characterized in that** the polysilane mixtures having predominantly components of medium molar mass which are distillable in an undecomposed state are fed to a distillation in order to obtain individual components in pure form and/or fractions of defined boiling ranges.

12. The method for the finished-product-related production and further processing of mixtures of halogenated polysilanes according to claims 1 to 8 and 11, **characterized in that** the distillates or distillation residues having predominantly low or high molar masses are fed directly to further processing or are transferred into another distillation column.

13. The method for the finished-product-related production and further processing of mixtures of halogenated polysilanes according to claims 1 to 8, **characterized in that** the separation fractions having predominantly low or medium molar masses is fed directly to further processing or transferred into another distillation column.

14. The method for the finished-product-related production and further processing of mixtures of halogenated polysilanes according to claims 1 to 11 and 13, **characterized in that** the polysilanes having low, medium or high |[*molar mass]* |[II]obtained after the distillation are hydrogenated, and partially hydrogenated or perhydrogenated compounds are obtained.

15. The method for the finished-product-related production and further processing of mixtures of halogenated polysilanes according to claim 14, **characterized in that** the hydrogenation is carried out in ethers and/or aromatic solvents.

16. The method for the finished-product-related production and further processing of mixtures of halogenated polysilanes according to claim 14 or 15, **characterized in that** metal hydrides and metalloid hydrides are used as hydrogenation agents.

17. The method for the finished-product-related production and further processing of mixtures of halogenated polysilanes according to claims 14 to 16, **characterized in that** the hydrogenation is carried out at temperatures below 20°C.

18. The method for the finished-product-related production and further processing of mixtures of halogenated polysilanes according to claims 1 to 12, **characterized in that** the polysilanes with low, medium and high molar mass obtained after the distillation are fed to methylation and partially methylated or permethylated organopolysilanes of the form SiₙXₐMe_{b}(a+b=2n) and SiₙX_{c}Me_{d}(c+d=2n+2) are obtained.

19. The method for the finished-product-related production and further processing of mixtures of halogenated polysilanes according to claim 18, **characterized in that** organometalloid and/or organometallic compounds are used as methylation agents.

20. The method for the finished-product-related production and further processing of mixtures of halogenated polysilanes according to claims 18 to 19, **characterized in that** the obtained organopolysilanes are incorporated into or grafted onto polymers.

21. The method for the finished-product-related production and further processing of mixtures of halogenated polysilanes according to claims 1 to 17, **characterized in that** mixtures of low-molecular-weight halogenated polysilanes are passed over a heated surface directly from the gaseous phase for the deposition of silicon and are pyrolytically decomposed there.

22. The method for the finished-product-related production and further processing of mixtures of halogenated polysilanes according to claims 1 to 16, **characterized in that** liquid halogenated polysilane mixtures or solutions thereof in suitable solvents are applied onto deposition surfaces and are decomposed there by pyrolysis, with silicon being deposited there.

23. The method for the finished-product-related production and further processing of mixtures of halogenated polysilanes according to claims 14 to 17, **characterized in that** hydrogenated polysilanes of selected molar masses are applied onto suitable surfaces in the liquid phase or in solution and are decomposed by heating, whereby silicon is deposited on these surfaces.

24. The method for the finished-product-related production and further processing of mixtures of halogenated polysilanes according to claims 21 to 22, **characterized in that** amorphous, polycrystalline or monocrystalline silicon thin films on any carrier surfaces are obtained as the finished product.

25. The method for the finished-product-related production and further processing of mixtures of halogenated polysilanes according to claims 21 to 24, **characterized in that** silicon is deposited as a film of any thickness from mixtures of halogenated polysilanes above 400°C or hydrogenated polysilanes above 200°C.

26. The method for the finished-product-related production and further processing of mixtures of halogenated polysilanes according to claims 21 to 25, **characterized in that** deposited silicon films are subjected to a thermal post-treatment.

## Revendications

1. Procédé pour la production liée à un produit fini et pour un traitement ultérieure de mélanges de polysilanes halogénés en vue de la génération de produits en silicium et/ou à base de silicium, **caractérisé en ce que**, en fonction du mélange de polysilanes généré de polysilanes de faible poids moléculaire présentant de 2 à 6 atomes de silicium, de polysilanes de poids moléculaire moyen présentant de 7 à 14 atomes de silicium et de polysilanes de poids moléculaire élevé présentant au moins 15 atomes de silicium, et du produit fini souhaité et/ou produit intermédiaire,
- un mélange de polysilanes halogénés présentant des substituants X, où X est sélectionné parmi le groupe consistant en F, Cl, Br, I et H, lequel mélange a été généré au cours d'une étape chimique à plasma à partir de SiX₄, où X est sélectionné parmi le groupe consistant en F, Cl, Br et I, et H₂ était généré dans la phase gazeuse ou liquide est séparé en fractions individuelles dans une ou plusieurs colonnes de distillation et les distillats sont traités directement et alimentés vers d'autres étapes de traitement, dans lequel le mélange de polysilanes arrivant pour traitement supplémentaire est contrôlé quant à sa composition par la régulation du processus de production et des flux de substances, et dans lequel les polysilanes halogénés qui sont générés sont faibles quant à l'hydrogène avec un rapport H : X ≤ 1 : 5.

2. Procédé pour la production liée à un produit fini et pour un traitement supplémentaire de mélanges de polysilanes halogénés selon la revendication 1, **caractérisé en ce que**, pour le contrôle de la composition du mélange de polysilanes, un ou plusieurs réacteurs à plasma sont traversés de manière successive par la mélange de réaction alimentée composée de silane halogéné et de H₂, et la masse molaire moyenne du mélange de polysilanes augmente après passage à travers chaque réacteur à plasma.

3. Procédé pour la production liée à un produit fini et pour un traitement supplémentaire de mélanges produits par voie chimique à plasma de polysilanes halogénés selon la revendication 1 ou 2, **caractérisé en ce que** pour le contrôle de la composition du mélange de polysilanes dans un réacteur à plasma, une pluralité de sources de plasma sont fournies, et celles-ci sont traversées par le mélange de réaction, et après chaque source de plasma, dans le un réacteur à plasma, la masse molaire moyenne du mélange de polysilanes augmente.

4. Procédé pour la production liée à un produit fini et pour un traitement supplémentaire de mélanges produits par voie chimique à plasma de polysilanes halogénés selon l'une quelconque des revendications 1 à 3, **caractérisé en ce que** la température du réacteur à plasma ou de composants individuels est maintenue au-dessous de la température ambiante, et la viscosité du mélange de polysilanes obtenu est contrôlée par le rapport de mélange entre la teneur en hydrogène et la teneur en silane halogéné du mélange de gaz.

5. Procédé pour la production liée à un produit fini et pour un traitement supplémentaire de mélanges produits par voie chimique à plasma de polysilanes halogénés selon l'une quelconque des revendications 1 à 4, **caractérisé en ce que** les sources de plasma utilisées dans le réacteur à plasma sont pulsées.

6. Procédé pour la production liée à un produit fini et pour un traitement supplémentaire de mélanges produits par voie chimique à plasma de polysilanes halogénés selon l'une quelconque des revendications 1 à 5, **caractérisé en ce que** le plasma dans le réacteur à plasma est désactivé périodiquement par un champ alternatif électromagnétique supplémentaire ou passe par une enceinte résonnante accordée sur la source à hyperfréquences.

7. Procédé pour la production liée à un produit fini et pour un traitement supplémentaire de mélanges produits par voie chimique à plasma de polysilanes halogénés selon l'une quelconque des revendications 1 à 6, **caractérisé en ce qu'**une émission de plasma pulsé et/ou une décharge électrique supplémentaire et/ou une désactivation de plasma sont alternées dans le réacteur à plasma.

8. Procédé pour la production liée à un produit fini et pour un traitement supplémentaire de mélanges produits par voie chimique à plasma de polysilanes halogénés selon l'une quelconque des revendications 1 à 7, **caractérisé en ce que** le plasma dans le réacteur à plasma est en outre irradié avec une radiation infrarouge, une radiation visible ou une radiation ultraviolette.

9. Procédé pour la production liée à un produit fini et pour un traitement supplémentaire de mélanges de polysilanes halogénés selon l'une quelconque des revendications 1 à 8, **caractérisé en ce que** les mélanges de polysilanes présentant de manière prédominante un faible poids moléculaire sont alimentés vers une distillation afin d'obtenir des polysilanes halogénés de faible poids moléculaire sous une forme pure.

10. Procédé pour la production liée à un produit fini et pour un traitement supplémentaire de mélanges de polysilanes halogénés selon l'une quelconque des revendications 1 à 9, **caractérisé en ce que** le résidu de distillation présentant de manière prédominante des masses molaires moyennes est alimenté vers un traitement supplémentaire direct ou transféré dans une autre colonne de distillation.

11. Procédé pour la production liée à un produit fini et pour un traitement supplémentaire de mélanges de polysilanes halogénés selon l'une quelconque des revendications 1 à 9, **caractérisé en ce que** les mélanges de polysilanes présentant de manière prédominante des composants de masse molaire moyenne, lesquels peuvent être distillés dans un état décomposé, sont alimentés vers une distillation afin d'obtenir des composants individuels sous une forme pure et/ou des fractions de plages d'ébullition définies.

12. Procédé pour la production liée à un produit fini et pour un traitement supplémentaire de mélanges de polysilanes halogénés selon l'une quelconque des revendications 1 à 8 et 11, **caractérisé en ce que** les distillats ou résidus de distillation présentant de manière prédominante des masses molaires faibles ou élevées sont alimentés vers un traitement supplémentaire directe ou transférés dans une autre colonne de distillation.

13. Procédé pour la production liée à un produit fini et pour un traitement supplémentaire de mélanges de polysilanes halogénés selon l'une quelconque des revendications 1 à 8, **caractérisé en ce que** la fraction de séparation présentant de manière prédominante des masses molaires faible ou moyenne est alimentée directement vers un traitement supplémentaire ou transférée dans une autre colonne de distillation.

14. Procédé pour la production liée à un produit fini et pour un traitement supplémentaire de mélanges de polysilanes halogénés selon l'une quelconque des revendications 1 à 11 et 13, **caractérisé en ce que** des polysilanes présentant une [masse molaire] faible, moyenne, ou élevée obtenus après la distillation sont hydrogénés, et des composés partiellement hydrogénés ou perhydrogénés sont obtenus.

15. Procédé pour la production liée à un produit fini et pour un traitement supplémentaire de mélanges de polysilanes halogénés selon la revendication 14, **caractérisé en ce que** l'hydrogénation est réalisée dans des éthers et/ou des solvants aromatiques.

16. Procédé pour la production liée à un produit fini et pour un traitement supplémentaire de mélanges de polysilanes halogénés selon la revendication 14 ou 15, **caractérisé en ce que** des hydrures métalliques et des hydrures métalloïdes sont utilisés comme agents d'hydrogénation.

17. Procédé pour la production liée à un produit fini et pour un traitement supplémentaire de mélanges de polysilanes halogénés selon l'une quelconque des revendications 14 à 16, **caractérisé en ce que** l'hydrogénation est réalisée à des températures inférieures à 20 °C.

18. Procédé pour la production liée à un produit fini et pour un traitement supplémentaire de mélanges de polysilanes halogénés selon l'une quelconque des revendications 1 à 12, **caractérisé en ce que** des polysilanes présentant une masse molaire faible, moyenne, et élevée obtenus après la distillation sont alimentés vers une méthylation, et des organopolysilanes partiellement méthylés ou perméthylés de la forme SiₙXₐMe_{b}(a+b=2n) et SiₙX_{c}Me_{d}(c+d=2n+2) sont obtenus.

19. Procédé pour la production liée à un produit fini et pour un traitement supplémentaire de mélanges de polysilanes halogénés selon la revendication 18, **caractérisé en ce que** des composés organométalloïdes et/ou orgaométalliques sont utilisés comme agents de méthylation.

20. Procédé pour la production liée à un produit fini et pour un traitement supplémentaire de mélanges de polysilanes halogénés selon l'une quelconque des revendications 18 à 19, **caractérisé en ce que** les organopolysilanes obtenus sont incorporés dans des polymères ou greffés sur ceux-ci.

21. Procédé pour la production liée à un produit fini et pour un traitement supplémentaire de mélanges de polysilanes halogénés selon l'une quelconque des revendications 1 à 17, **caractérisé en ce que** des mélanges de polysilanes halogénés présentant un faible poids moléculaire sont passés sur une surface chauffée directement à partir de la phase gazeuse pour le dépôt de silicium et y sont décomposés de manière pyrolytique.

22. Procédé pour la production liée à un produit fini et pour un traitement supplémentaire de mélanges de polysilanes halogénés selon l'une quelconque des revendications 1 à 16, **caractérisé en ce que** des mélanges de polysilanes hydrogénés liquides, ou solutions de ceux-ci dans des solvants appropriés, sont appliqués sur des surfaces de dépôt et y sont décomposés par pyrolyse, du silicium y étant ainsi déposé.

23. Procédé pour la production liée à un produit fini et pour un traitement supplémentaire de mélanges de polysilanes halogénés selon l'une quelconque des revendications 14 à 17, **caractérisé en ce que** des polysilanes hydrogénés de masses molaires sélectionnées sont appliqués sur des surfaces appropriées dans la phase liquide ou en solution, et sont décomposés par chauffage, du silicium étant de ce fait déposé sur ces surfaces.

24. Procédé pour la production liée à un produit fini et pour un traitement supplémentaire de mélanges de polysilanes halogénés selon l'une quelconque des revendications 21 à 22, **caractérisé en ce que** des couches minces de silicium amorphe, polycristallin ou monocristallin sur des surfaces de support arbitraires sont obtenues comme produit fini.

25. Procédé pour la production liée à un produit fini et pour un traitement supplémentaire de mélanges de polysilanes halogénés selon l'une quelconque des revendications 21 à 24, **caractérisé en ce que** le silicium est déposé sous la forme d'une couche d'épaisseur quelconque à partir de mélanges de polysilanes hydrogénés au-dessus de 400 °C ou de polysilanes hydrogénés au-dessus de 200 °C.

26. Procédé pour la production liée à un produit fini et pour un traitement supplémentaire de mélanges de polysilanes halogénés selon l'une quelconque des revendications 21 à 25, **caractérisé en ce que** les films de silicium déposés sont soumis à un post-traitement thermique.
